# EUROPÄISCHE PATENTSCHRIFT

(11) **EP 2 147 854 B1**
(45) Veröffentlichungstag und Bekanntmachung des Hinweises auf die Patenterteilung: **16.02.2011**
(21) Anmeldenummer: 09009226.3
(22) Anmeldetag: 15.07.2009
(51) Int. Cl.: B63H 20/00, F16C 11/10, F16M 11/14, F16M 11/04

(54) **Halterung für einen Außenbordmotor**
Mounting for an outboard motor
Fixation pour un moteur hors-bord

(30) Priorität: 16.07.2008 DE 102008033387; 12.08.2008 EP 08014390
(43) Veröffentlichungstag der Anmeldung: 27.01.2010
(73) Patentinhaber: Torqeedo GmbH, 82319 Starnberg (DE)
(72) Erfinder: Böbel, Friedrich, 82547 Eurasburg (DE)
(74) Vertreter: Gellner, Bernd

(56) Entgegenhaltungen:
- EP-A- 1 158 238
- US-A- 3 674 228
- US-A- 4 597 354
- US-A1- 2006 011 795

## Beschreibung

Die Erfindung betrifft ein Boot, insbesondere Kajak, mit einer Halterung zur Befestigung eines Außenbordmotors an dem Boot, wobei die Halterung einen Tragarm aufweist, der ein erstes Befestigungselement zur Befestigung des Tragarms an dem Boot aufweist. Ferner ist die Erfindung auf einen Außenbordmotor mit einer Halterung gerichtet, wobei die Halterung mit einem Tragarm versehen ist, der ein erstes Befestigungselement zur Befestigung des Tragarms an einem Boot, insbesondere an einem Kajak, aufweist.

Außenbordmotoren sind ein bekanntes Antriebsmittel für Boote. In der Regel werden diese am Heck eines Bootes angebracht. Hierzu besitzen die Boote am Heck häufig einen sogenannten Spiegel, das heißt eine hintere, im Wesentlichen senkrechte Abschlussplatte oder Bordwand, an der der Außenbordmotor mittels einer Klemmvorrichtung befestigt werden kann.

Diese Befestigungsart ist jedoch nicht für alle Bootstypen geeignet. So werden beispielsweise Boote mit nur geringer Bauhöhe, insbesondere Kajaks, anstelle des Spiegels mit speziellen, individuell angepassten Befestigungsvorrichtungen für einen Außenbordmotor ausgerüstet.

Aus der US 6,394,408 ist eine Halterung bekannt, bei der der Außenbordmotor nicht an einem Spiegel festgeklemmt wird, sondern auf dem Bootsdeck ein Tragarm befestigt ist, der sich nach hinten bis über das Heck des Bootes erstreckt und an dessen hinterem Ende eine in ihrer Ausrichtung frei einstellbare Aufnahme für den Schaft des Außenbordmotors angebracht ist.

Für Kajaks ist diese Halterung aber nur bedingt geeignet. Die Heckformen der verschiedenen Kajaktypen unterscheiden sich deutlich voneinander, so dass die Befestigung des Tragarms auf dem Bootsdeck an die unterschiedlichen Ausführungen des Hecks jeweils angepasst werden müsste. Ist das Kajak zudem mit einem Ruder versehen, so ist die in der US 6,394,408 vorgeschlagene Halterung schon aus Platzgründen nicht einsetzbar. Die schmale Bauweise von Kajaks erlaubt es nicht, Außenbordmotor und Ruder nebeneinander am Heck anzubringen.

Aufgabe vorliegender Erfindung ist es daher, ein Boot mit einer Halterung zu entwickeln, mit der ein Außenbordmotor an dem Boot, insbesondere an einem Kajak, befestigt werden kann, wobei die Halterung für möglichst alle Arten und Ausführungen des Boots geeignet sein soll.

Diese Aufgabe wird durch ein Boot, insbesondere Kajak, mit einer Halterung zur Befestigung eines Außenbordmotors an dem Boot gelöst, wobei die Halterung einen Tragarm aufweist, der ein erstes Befestigungselement zur Befestigung des Tragarms an dem Boot aufweist, und welches dadurch gekennzeichnet ist, dass an dem Boot ein Knauf vorgesehen ist und dass das erste Befestigungselement als Klemmvorrichtung zur Aufnahme und Fixierung des Knaufs ausgeführt ist.

Der erfindungsgemäße Außenbordmotor besitzt eine Halterung, welche mit einem Tragarm versehen ist, der ein erstes Befestigungselement zur Befestigung des Tragarms an einem Boot, insbesondere an einem Kajak, aufweist, wobei als erstes Befestigungselement eine Klemmvorrichtung zur Aufnahme und Fixierung eines mit dem Boot verbundenen Knaufs vorgesehen ist.

Erfindungsgemäß erfolgt die Fixierung des Außenbordmotors an dem Boot über einen Tragarm, der mittels eines aus einem Knauf und einer entsprechenden Klemmvorrichtung bestehenden Kugelgelenks an dem Bootskörper befestigt ist.

Der Begriff "Knauf" soll insbesondere eine kugel- oder polyederförmige Gestalt umfassen. Vorzugsweise ist der Knauf als kugelförmiges Ende eines mit dem Boot verbundenen, kurzen Distanzstücks ausgeführt. Anstelle eines kugelförmigen Endstücks kann aber auch ein Polyeder oder Vielflächner, insbesondere ein regelmäßiger Polyeder, wie zum Beispiel ein Dodekaeder, vorgesehen sein. Auch ein Kugelsegment oder ein Teilstück eines Polyeders können den erfindungsgemäßen Knauf bilden.

Entsprechend soll der Begriff "Klemmvorrichtung" Vorrichtungen aller Art umfassen, die es erlauben, den Tragarm an dem Knauf zu befestigen. Der Knauf und die Klemmvorrichtung bilden dabei zusammen eine Art Kugelgelenk, welches die Ausrichtung des Tragarms in verschiedenen Richtungen relativ zum Boot gestattet.

Die Verbindung zwischen der Klemmvorrichtung und dem Knauf ist vorzugsweise kraftschlüssig, das heißt, der Zusammenhalt der Verbindung von Klemmvorrichtung und Knauf wird im Wesentlichen durch die zwischen der Knaufaußenseite und der Innenfläche der Klemmvorrichtung auftretenden Reibungs- bzw. Haftkraft erreicht. Entsprechend ist die Formgebung der Innenseite der Klemmvorrichtung an die Oberfläche des Knaufs angepasst, so dass bei fixierter Klemmvorrichtung möglichst hohe Reibungskräfte erzielt werden.

Besonders bevorzugt wird eine Kugel als Knauf eingesetzt. Bei einem kugelförmigen Knauf werden die Innenseiten der Klemmvorrichtung, welche mit dem Knauf in Kontakt kommen, mit im Wesentlichen demselben Radius konkav ausgebildet sein. Die Klemmvorrichtung mit dem Tragarm ist bei dieser Ausführung in alle Raumrichtungen frei ausrichtbar.

Die Befestigung der Klemmvorrichtung an dem Knauf kann aber auch über eine formschlüssige Verbindung erfolgen, das heißt dadurch, dass Teile des Knaufs und der Klemmvorrichtung ineinandergreifen. Beispielsweise kann der Knauf mit mehreren Erhebungen versehen sein, die in entsprechende Ausbuchtungen der Klemmvorrichtung greifen. Sind die Erhebungen und die entsprechenden Ausbuchtungen regelmäßig angeordnet, so kann auch in diesem Fall der Tragarm in verschiedenen Orientierungen relativ zum Knauf bzw. Boot befestigt werden.

Eine formschlüssige Verbindung hat den Vorteil, dass in der Regel geringere Kräfte zur Fixierung der Klemmvorrichtung an dem Knauf aufgewendet werden müssen als bei einer rein kraftschlüssigen Verbindung. Andererseits müssen Abstriche im Hinblick auf die freie Orientierbarkeit der Klemmvorrichtung und des Tragarms gemacht werden, da der Zusammenhalt nur dann erreicht wird, wenn die entsprechenden Teile von Klemmvorrichtung und Knauf ordnungsgemäß ineinandergreifen. Das heißt, die Klemmvorrichtung mit dem Tragarm muss in eine bestimmte Position - in der Regel in eine von mehreren ausgezeichneten Positionen - relativ zum Knauf gebracht werden. Je nach Einsatzgebiet können sowohl kraft- als auch formschlüssige Verbindungen vorteilhaft sein. Neben rein kraft- oder formschlüssigen Verbindungen sind ebenso Verbindungen mit form- und kraftschlüssigen Anteilen möglich. Von Vorteil handelt es sich aber in allen Fällen um eine lösbare Verbindung.

Mit dem Begriff "Kugelgelenk" wird im Folgenden ein Gelenk bezeichnet, bei welchem der Gelenkkopf eine kugel- oder knaufähnliche Form besitzt. Die oben genannte Kombination aus Klemmvorrichtung und Knauf wird in diesem Sinne als Kugelgelenk verstanden. Das Kugelgelenk erlaubt die Ausrichtung des Tragarms in verschiedenste Raumrichtungen. Die erfindungsgemäße Außenbordmotorhalterung kann daher für nahezu beliebige Bootstypen eingesetzt werden. Unabhängig von der Ausführung des Bootskörpers kann der Tragarm so ausgerichtet werden, dass der daran befestigte Außenbordmotor in gewünschter Weise ins Wasser eintaucht. Ist zum Beispiel das Heck nach oben gezogen oder fällt umgekehrt die Bootsoberseite nach hinten ab, so kann der Tragarm dennoch im Wesentlichen waagrecht zur Wasseroberfläche an dem Boot arretiert werden.

Der Antriebsmotor des Außenbordmotors ist üblicherweise in einem Unterwasserkörper, dem sogenannten Pylon, untergebracht. Der Antriebsmotor treibt eine Antriebswelle an, die über eine Durchführung aus dem Pylon herausgeführt ist und an deren Ende ein Propeller angebracht ist. In einer bevorzugten Ausführungsform der Erfindung ist der Pylon an einem Schaft befestigt, welcher wiederum über ein zweites Befestigungselement mit dem Tragarm verbunden ist.

Es ist aber auch möglich, den Pylon direkt mit dem Tragarm zu verbinden, ohne einen Schaft als Zwischenelement vorzusehen. In diesem Fall ist es insbesondere von Vorteil, wenn der Tragarm gebogen oder abgewinkelt ist. Die unmittelbare Befestigung des Pylons am Tragarm ohne Schaft ist beispielsweise dann von Vorteil, wenn das Boot ein separates Ruder aufweist und der Außenbordmotor nur zum Vortrieb, aber nicht zur Steuerung des Bootes eingesetzt wird, d.h. wenn der Pylon und der Propeller in einer festen Position relativ zum Boot verbleiben und nicht, beispielsweise zum Lenken, bewegt werden.

In einer bevorzugten Ausführungsform ist der Abstand zwischen der Kugelklemmvorrichtung, d.h dem Kugelgelenk, und dem zweiten Befestigungselement veränderbar. In einer besonders bevorzugten Variante kann sowohl die relative Position der Klemmvorrichtung zum Tragarm als auch die des zweiten Befestigungselements zum Tragarm verändert werden. So sind beispielsweise die Klemmvorrichtung und/oder das zweite Befestigungselement längs des Tragarms verschiebbar und in unterschiedlichen Positionen arretierbar. Auf diese Weise kann auch der Abstand des von dem Tragarm gehaltenen Außenbordmotors zum Boot eingestellt werden.

Der Tragarm besitzt vorzugsweise eine Länge zwischen 50 cm und 100 cm. Vorzugsweise ist der Tragarm als Geradrohr oder Profilrohr mit rundem oder viereckigem Querschnitt ausgeführt. Je nach den Platzverhältnissen im und am Boot kann es aber auch günstig sein, einen abgewinkelten Tragarm zu verwenden oder ein weiteres Gelenk im Tragarm vorzusehen. Ein abgewinkelter, gekrümmter oder gebogener Tragarm ist insbesondere dann von Vorteil, wenn der Pylon, das heißt der Unterwasserkörper des Außenbordmotors mit dem Propeller, direkt am Tragarm befestigt ist.

Die Befestigung des Schaftes des Außenbordmotors an dem Tragarm erfolgt bevorzugt mittels einer Klemmvorrichtung. Das zweite Befestigungselement weist hierzu zwei relativ zueinander bewegliche Klemmbacken auf. Der Tragarm wird zwischen den beiden Klemmbacken positioniert. Zur Fixierung werden die Klemmbacken zum Beispiel mittels einer Schraubverbindung aufeinander zu bewegt und an den Tragarm gepresst.

Die zweite Befestigungsvorrichtung besitzt vorzugsweise ein Gelenk, welches die Bewegung des Schaftes relativ zum Tragarm in zwei zueinander senkrechten Ebenen erlaubt. Ein solches Gelenk soll im Folgenden auch als Kreuzgelenk bezeichnet werden.

Vorzugsweise sind zwei Drehgelenke vorgesehen, deren Drehachsen um 90° gegeneinander versetzt angeordnet sind. Die zweite Befestigungsvorrichtung wird vorzugsweise so an dem Tragarm befestigt, dass die Drehachse des ersten Drehgelenks beim Einsatz des Bootes im Wesentlichen parallel zur Wasseroberfläche orientiert ist. Durch Drehen des Schaftes mit dem Pylon des Außenbordmotors um das erste Drehgelenk kann so der Außenbordmotor aus dem Wasser gekippt werden.

Um den Außenbordmotor problemlos kippen zu können, ist es günstig, einen Seilzug vorzusehen. Zweckmäßigerweise ist hierzu am Außenbordmotor ein Hebelarm angebracht, den der Fahrer des Bootes von seiner normalen Position im Boot aus mit Hilfe des Seilzugs bewegen kann. Insbesondere in den meist schmal gebauten Kajaks, in denen sich der Fahrer nur schwer in eine andere Position begeben kann, ist so ein sicheres, schnelles und einfaches Kippen des Außenbordmotors möglich.

Das Seil läuft dabei vorzugsweise durch ein oder mehrere Ösen oder Umlenkrollen. Die Fixierung des Seils am Boot bzw. Kajak erfolgt von Vorteil durch eine übliche Seilklemme.

Die Drehachse des zweiten Drehgelenks der zweiten Befestigungsvorrichtung ist vorzugsweise senkrecht zur Wasseroberfläche ausgerichtet, so dass während des Betriebs durch Drehen des Außenbordmotors um diese Drehachse die Fahrtrichtung des Boots geändert werden kann.

Viele Kajaks besitzen ein Ruder, um das Kajak zu steuern und auf Kurs zu halten. Das Ruder wird dabei meist über einen Seilzug mit den Füßen betätigt. Wenn der Außenbordmotor erfindungsgemäß am Kajak befestigt ist und über ein Drehgelenk so bewegt werden kann, dass die Längsachse des Pylons und die Längsachse des Kajaks in unterschiedliche Winkelstellungen relativ zueinander gebracht werden können, d.h. wenn durch Drehung des Außenbordmotors auch die Fahrtrichtung des Kajaks geändert werden kann, ist es vorteilhaft, an dem Außenbordmotor Ösen, Umlenkrollen und/oder entsprechende Befestigungsmöglichkeiten für einen Seilzug anzubringen, um den Außenbordmotor mittels des Seilzugs zu lenken. Mit besonderem Vorteil wird hierzu eine bereits vorhandene Lenkeinrichtung, beispielsweise die oben beschriebene mit den Füßen betätigbare Seilzuglenkung, genutzt.

Die Klemmvorrichtung zur Befestigung des Tragarms an dem Knauf weist vorzugsweise eine erste und eine zweite Lagerschale auf, wobei die erste Lagerschale fest mit dem Tragarm verbunden ist. Die zweite Lagerschale wird über eine lösbare Verbindung mit der ersten Lagerschale verbunden, so dass die beiden Lagerschalen den am Boot befestigten Knauf umgreifen und einklemmen. Die Verbindung der beiden Lagerschalen erfolgt von Vorteil mittels Schrauben.

Von Vorteil besitzt die erfindungsgemäße Halterung einen Verlängerungsarm, der zum einen an dem Knauf und zum anderen an einem zweiten Fixpunkt mit dem Boot verbunden ist. Über den Verlängerungsarm wird das von dem Außenbordmotor und dem Tragarm ausgeübte Drehmoment nicht ausschließlich von dem Knauf aufgenommen, sondern auch auf den zweiten Fixpunkt verteilt. Die mechanische Belastung der Befestigung des Knaufs am Boot wird so deutlich verringert.

Zur Verringerung der durch den Außenbordmotor auf den Knauf einwirkenden Kräfte ist es günstig, ein Auflager oder eine Stütze vorzusehen, auf dem bzw. auf der der Tragarm gelagert ist. Da sich der Propeller des Außenbordmotors im Betrieb unter Wasser befindet, während der Knauf und der Tragarm oberhalb der Wasseroberfläche an dem Boot befestigt sind, wirken auf den Tragarm und den Knauf neben der gewünschten Vortriebskraft in Bootslängsrichtung auch Scherkräfte senkrecht zur Bootsoberfläche. Zur Aufnahme dieser Kräfte ist es günstig, den Tragarm zwischen dem Knauf und dem Bootsrand mittels eines Auflagers zu stützen. Unter dem Begriff "Auflager" wird ein Stützelement verstanden, welches zumindest vertikale Kräfte, d.h. Kräfte senkrecht zur Wasseroberfläche, aufnehmen kann. Das Auflager kann auch mit einer Aufnahme oder Führung für den Tragarm versehen sein, so dass der Tragarm beispielsweise auch im Hinblick auf Kräfte, die senkrecht zu dessen Längsachse und parallel zur Wasser- bzw. Bootsoberfläche wirken, fixiert ist. Schließlich ist es auch günstig, den Tragarm an dem Auflager so zu befestigen, dass alle Bewegungsfreiheitsgrade des Tragarms fixiert sind. Dies kann beispielsweise durch eine am Auflager angebrachte geeignete Einspannung für den Tragarm erfolgen. Das Auflager besteht vorzugsweise aus Kunststoff, Gummi oder Hartgummi.

Das Auflager kann entweder nur auf das Boot gelegt werden oder an dem Boot befestigt werden. Im ersten Fall wird das Auflager im Betrieb, d.h. während der Fahrt des Bootes, durch die von dem Außenbordmotor auf den Tragarm ausgeübten Kräfte zwischen Tragarm und Boot eingeklemmt und gehalten. Bei ausgeschaltetem Außenbordmotor liegt das Auflager lose auf dem Boot und kann schnell entfernt werden. Im zweiten Fall ist das Auflager so mit dem Boot verbunden, dass das Auflager auch bei ausgeschaltetem Antrieb fest in seiner Position verbleibt. Das Auflager kann hierzu beispielsweise an das Boot, insbesondere auf die Bootsoberseite, geklebt oder mit diesem verschraubt werden.

Von Vorteil besteht das Auflager aus mehreren Elementen, die aufeinander gesetzt und/oder miteinander verbunden werden können. Je nachdem welche Form der Bootsrumpf bzw. die Bootsoberseite haben und je nachdem wo der Tragarm abgestützt werden soll, werden unterschiedlich hohe Auflager benötigt. Durch den modularen Aufbau des Auflagers aus mehreren Elementen kann dieses leicht an die verschiedenen Anforderungen angepasst werden.

Wie oben bereits ausgeführt, kann der Tragarm lose auf dem Auflager liegen oder, bevorzugt, an diesem befestigt sein. Die Befestigung des Tragarms am Auflager ist von Vorteil lösbar ausgeführt, beispielsweise über eine Einspannvorrichtung oder eine Schraubverbindung.

Das Auflager wird möglichst nahe am Bootsrand angebracht, so dass das von dem Außenbordmotor auf den Tragarm ausgeübte Drehmoment von dem Auflager möglichst gut aufgenommen wird. Vorzugsweise beträgt in Längsrichtung des Tragarms der Abstand zwischen dem Auflager und dem Bootsrand weniger als 20 cm. Von Vorteil ist der Abstand zwischen Knauf und Auflager größer als der Abstand zwischen Auflager und Bootsrand,.

Der Knauf, der zur Befestigung des Tragarms am Boot dient, ist von Vorteil an der Oberseite des Bootes angebracht. Grundsätzlich kann der Knauf aber auch an einer äußeren Bordwand des Bootes befestigt sein, wenn dies aus Platzgründen erforderlich oder vorteilhaft ist. Durch die erfindungsgemäße freie Einstellbarkeit und Ausrichtung des Tragarms in alle Raumrichtungen ist selbst eine Anbringung des Knaufs im Bootsinneren möglich.

Soll der Knauf an einer Bootsdecke, das heißt einer den Bootskörper nach oben begrenzenden Wandung, angebracht werden, so ist, insbesondere bei Kajaks, die entsprechende Stelle an der Innen- bzw. Unterseite der Bootsdecke häufig nicht oder nur schwer zugänglich. Es hat sich daher als vorteilhaft erwiesen, den Knauf mittels Schrauben und Spreizdübeln am Bootskörper bzw. einer Bootswand zu befestigen. Durch die gewünschte Stelle der Bootswandung oder Bootsdecke werden Löcher gebohrt, in die Spreizdübel oder Hohlraumdübel, insbesondere Klappdübel, Federklappdübel, Kippdübel oder Metallhohlraumdübel, eingeführt werden. Schrauben werden durch entsprechende Öffnungen in der Trägerplatte des Knaufs in die Dübel geschoben und festgeschraubt. Dabei werden die Dübel auseinandergespreizt und gegen die Innenseite der Bootswandung gedrückt. Zur Abdichtung können zuvor noch zwischen Trägerplatte und Bootswandung O-Ringe oder andere Dichtungselemente gelegt werden.

Der Tragarm wird bevorzugt so ausgerichtet, dass sich der daran befestigte Außenbordmotor hinter dem Boot befindet. Entsprechend ist der Knauf von Vorteil zwischen 10 cm und 100 cm vom Heck des Bootes beabstandet. Der Knauf wird vorzugsweise möglichst nahe am Heck angebracht, um den Tragarm kurz und die über den Tragarm übertragenen Drehmomente gering halten zu können. Teilweise, insbesondere bei Kajaks mit separatem Ruder, kann der Außenbordmotor aus Platzgründen weder am Heck befestigt noch dort angeordnet werden. In diesem Fall ist es günstig, den Knauf nicht zentral im hinteren Bootsteil anzubringen, sondern seitlich versetzt.

Die Erfindung ist insbesondere zur Befestigung eines Außenbordmotors an einem Kajak geeignet. Ein besonders bevorzugtes Einsatzgebiet der Erfindung sind See-, Wander- und Tourenkajaks.

Unter dem Begriff Kajak sollen sowohl offene als auch geschlossene Kajaks verstanden werden, das heißt sogenannte "Sit-on-tops", bei denen der oder die Fahrer auf dem Bootsrumpf sitzen, oder "Sit-Inside"-Kajaks, bei denen der oder die Fahrer im Kajak sitzen.

Kajaks sind in der Regel aus Kunststoff oder Holz gefertigt und meist für ein bis zwei Personen, teilweise auch für bis zu vier Personen ausgelegt. Je nach Einsatzgebiet unterscheiden sich Kajaks im Hinblick auf Verhältnis von Länge zu Breite und Form des Rumpfes zum Teil deutlich voneinander.

Seekajaks sind beispielsweise lang und relativ schmal mit einem besonders geformten Bug und Heck. Die Enden des Seekajaks sind hochgezogen, um auf den Wellen zu reiten, anstatt sie zu durchstoßen.

Wander- und Tourenkajaks sind etwa zwischen 3,50 m und 5 m lang und variieren in der Breite von 50 bis 70 cm. Wanderkajaks bieten vor und hinter dem Paddler meist viel Stauraum, so dass längere Touren kein Problem sind. Wanderkajaks werden meist auf Flüssen oder Seen eingesetzt.

Die Heckformen der verschiedenen Kajaktypen unterscheiden sich teilweise deutlich voneinander. Die Erfindung stellt eine Halterung für einen Außenbordmotor zur Verfügung, die unabhängig von der Ausführung des Boots und insbesondere dessen Hecks verwendet werden kann. Dieselbe Halterung ist bei unterschiedlichsten Bootstypen und Bootsformen einsetzbar und eignet sich daher besonders für Kajaks. Das Boot muss lediglich mit dem erfindungsgemäßen Knauf versehen sein.

Viele See- und Tourenkajaks sind mit einem Ruder versehen, um das Boot auf Kurs zu halten. Dies besteht aus einer Steuerflosse hinten am Heck des Kajaks oder unter dem Heck, welches meist über einen Seilzug mit den Füßen bedient wird. Aufgrund der schmalen Bauweise von Kajaks ist in diesem Fall am Heck meist kein Platz für eine übliche Befestigung eines Außenbordmotors. Die erfindungsgemäße Halterung ermöglicht die freie Ausrichtung des Tragarms nach allen Richtungen, so dass der Außenbordmotor dort platziert werden kann, wo es die Platzverhältnisse erlauben.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: eine erfindungsgemäße Halterung zur Befestigung eines Außenbordmotors an einem Boot, insbesondere an einem Kajak,
- Figur 2: eine detailliertere Darstellung des Kugelgelenks der Halterung gemäß Figur 1,
- Figur 3: einen Verlängerungsarm für die erfindungsgemäße Halterung,
- Figur 4: eine erfindungsgemäße Kugel, die am Boot befestigt wird und
- Figur 5: ein erfindungsgemäßes Kajak mit Außenbordmotorhalterung.

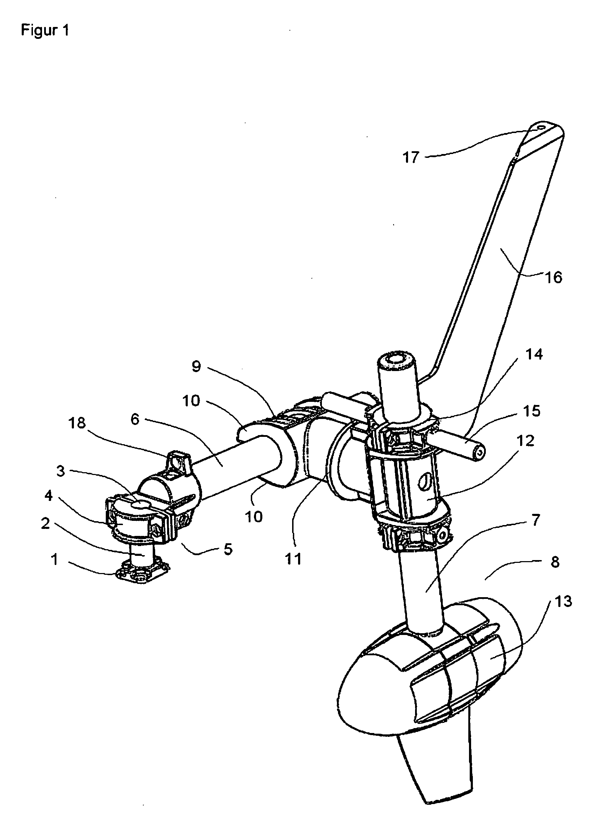

Figur 1 zeigt eine erfindungsgemäße Vorrichtung zur Befestigung eines Außenbordmotors 8 an einem Boot, insbesondere an einem Kajak. Der Außenbordmotor 8 weist einen Unterwasserkörper 13, einen sogenannten Pylon 13, auf, in dem ein in der Figur nicht dargestellter Elektromotor untergebracht ist. Der Elektromotor treibt eine Welle an, die den Pylon 13 durchstößt und auf die ein in der Figur der Übersichtlichkeit halber ebenfalls nicht dargestellter Propeller aufgesetzt ist. Der Pylon 13 wird von einem Schaft 7 im Betrieb unter Wasser gehalten.

Das Boot ist in der Zeichnung der Übersichtlichkeit halber nicht dargestellt. An der Oberseite des Bootes ist eine Trägerplatte 1 mittels Spreizdübeln befestigt, welche von oben durch die Kajakdecke bzw. Bootsoberseite gesteckt und dann mit Schrauben gespreizt werden. Die Trägerplatte 1 trägt ein Distanzstück 2, dessen der Trägerplatte 1 abgewandtes Ende mit einer Kugel 3 versehen ist.

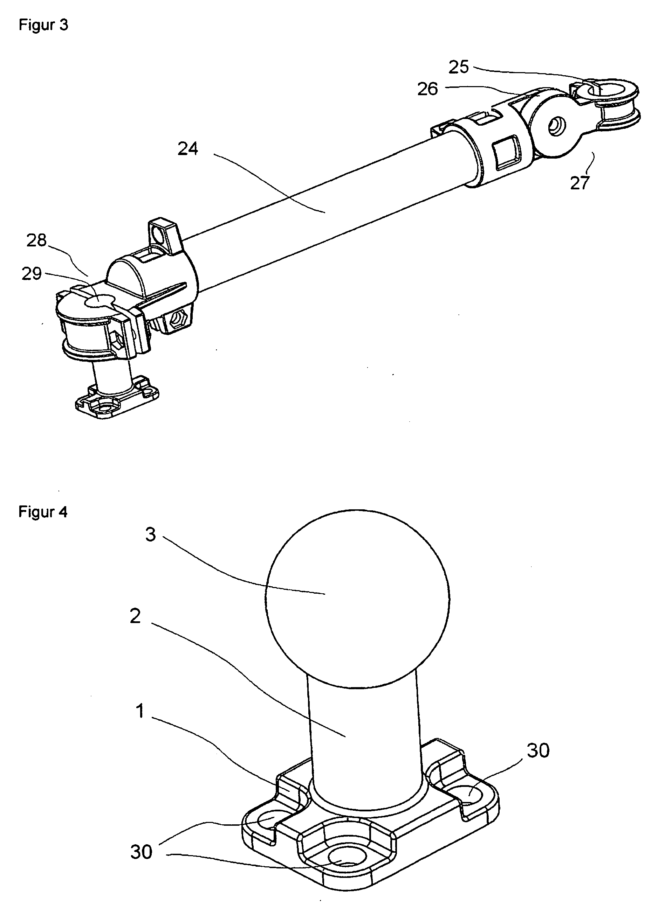

In Figur 4 ist die Kugel 3 im Detail dargestellt. Die Trägerplatte 1 ist mit vier Bohrungen 30 versehen, durch die Schrauben gesteckt und in die Spreiz- oder Hohlraumdübel eingeschraubt werden. Es hat sich gezeigt, dass sich für diesen Zweck insbesondere handelsübliche Hohlraumdübel eignen. Bewährt haben sich Klapp- oder Kippdübel, bei denen ein oder zwei Dübelflügel in dem Hohlraum auseinanderklappen oder durch Federkraft auseinandergedrückt werden und auf der Rückseite der Hohlwand, im vorliegenden Fall der Kajakdecke bzw. Bootsoberseite, eine breite Auflagefläche bilden. Ebenso günstig sind Hohlraumdübel, deren Längskörper in mehrere Längssegmente geteilt ist, die sich beim Anziehen der Schraube in dem Dübel auseinanderspreizen. Das Distanzstück 2 ist insbesondere zylindrisch ausgebildet und verbindet die Kugel 3 mit der Trägerplatte 1.

Die Kugel 3 bildet zusammen mit einer entsprechenden Klemmvorrichtung 4, die im Folgenden noch näher beschrieben wird, ein Kugelgelenk 5, welches einen Tragarm 6 trägt. Das Kugelgelenk 5 ist in alle drei Raumrichtungen bewegbar, so dass der Tragarm 6 in die gewünschte Richtung ausgerichtet und mittels der Klemmvorrichtung 4 fixiert werden kann.

Der Schaft 7 des Außenbordmotors 8 ist über eine zweite Befestigungsvorrichtung 9 an dem Tragarm 6 befestigt. Die zweite Befestigungsvorrichtung 9 besitzt hierzu zwei Klemmbacken 10, die den Tragarm 6 umgreifen und zusammengedrückt werden können, um eine feste Verbindung zu dem Tragarm 6 herzustellen. Werden die beiden Klemmbacken 10 nicht zusammengepresst, ist das zweite Befestigungselement 9 auf dem Tragarm 6 verschiebbar und drehbar.

Das zweite Befestigungselement 9 weist weiterhin ein Kippgelenk 11 und ein Drehgelenk 12 auf, deren Drehachsen senkrecht zueinander und senkrecht zum Tragarm 6 orientiert sind. Der Schaft 7 des Außenbordmotors 8 ist in dem Drehgelenk 12 drehbar gelagert und erlaubt so beispielsweise das Auslenken des Außenbordmotors 8 für Kurvenfahrten. Mittels des Kippgelenks 11 kann der Außenbordmotor 8 für Flachwasserfahrten in eine schräge Position oder ganz aus dem Wasser gekippt werden.

Sowohl das Kugelgelenk 5 als auch das zweite Befestigungselement 9 erlauben eine Ausrichtung des Tragarms 6 und des Schaftes 7 des Außenbordmotors 8 in verschiedenste Raumrichtungen. Durch entsprechende Einstellung des Kugelgelenks 5 und des zweiten Befestigungselements 9 lässt sich der Außenbordmotor 8 beispielsweise immer so ausrichten, dass der Schaft 7 senkrecht orientiert ist.

Am Schaft 7 ist mittels einer Art Rohrschelle 14 eine Querstange 15 befestigt, die zum Drehen des Schaftes 7 und damit zum Auslenken des Außenbordmotors 8 dient. An den Enden der Querstange 15 befinden sich Ösen, an denen die Seilzüge befestigt werden, die ansonsten zur Steuerung eines Ruders verwendet werden. Die Bedienung der Seilzüge erfolgt durch den Fahrer über Pedale im Kajakinneren, wie dies bei vielen Kajaks bereits zur Betätigung eines Ruders bekannt ist.

Die nicht starr, sondern drehbar mit dem zweiten Befestigungselement 9 verbundene Hälfte des Kippgelenks 11 ist mit einem Kipphebel 16 versehen. Durch Auslenken des Kipphebels 16 wird der Schaft 7 mit dem Außenbordmotor 8 aus der im Betrieb im Wesentlichen senkrechten Position in eine geneigte Position gebracht. Vorzugsweise erfolgt die Betätigung des Kipphebels 16 ebenfalls über einen Seilzug.

Hierzu ist durch die Spitze des Kipphebels 16 eine Öffnung 17 gebohrt, an der der Seilzug (in der Zeichnung nicht dargestellt) befestigt wird. Das Seil wird dann durch eine weitere Öse 18 geführt, die sich am Tragarm 6 befindet, und schließlich an einer Seilklemme neben dem Fahrersitz eingeklemmt. Der Kajakfahrer kann so, ohne seine Position im Kajak zu ändern, durch Ziehen an dem Seil den Außenbordmotor 8 nach oben klappen, um beispielswiese für Flachwasserfahrten den Tiefgang des Kajaks zu reduzieren. Abhängig von der Länge des Kipphebels 16 und der Anordnung der Bohrung 17 und der Öse 18 wird der Außenbordmotor 8 vorzugsweise um einen Winkel zwischen 45° und nahezu 90° bezogen auf die ursprüngliche Position nach oben geklappt. Der Winkel zwischen Schaft 7 und Tragarm 6 beträgt in diesem Fall in der hochgeklappten Stellung zwischen 135° und 180°.

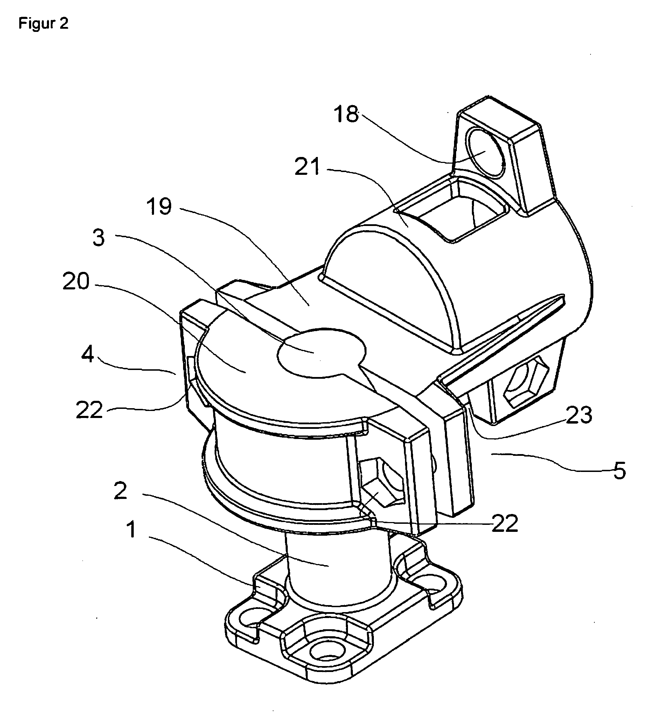

In Figur 2 ist die erfindungsgemäße Befestigung des Tragarms 6 am Boot im Detail dargestellt. Auf der Oberseite des Kajaks ist eine Trägerplatte 1 festgeschraubt. Hierzu werden in die Oberseite des Kajaks Löcher gebohrt, in die Spreizdübel aus Metall gesteckt werden. Die Trägerplatte 1 wird auf die Bohrungen aufgesetzt. Zur Abdichtung wird zwischen die Trägerplatte 1 und die Kajakwandung ein O-Ring oder eine sonstige Dichtung gelegt. Schrauben werden in die Bohrungen eingeführt und in die Spreizdübel eingeschraubt. Beim weiteren Festziehen der Schrauben werden die Spreizdübel auf der der Trägerplatte 1 gegenüberliegenden Seite der Kajakoberseite auseinander gespreizt und klemmen so die Kajakoberseite zwischen der Trägerplatte 1 und den Spreizdübeln ein. Mit der Trägerplatte 1 ist ein kurzes Distanzstück 2 verbunden, an dessen Ende eine Kugel 3 angebracht ist.

Die Klemmvorrichtung 4 besteht im Wesentlichen aus einer ersten Lagerschale 19 und einer zweiten Lagerschale 20, von denen die erste Lagerschale 19 mit einer Aufnahme 21 für den Tragarm 6 versehen ist. Die Innenseiten der ersten und der zweiten Lagerschale 19, 20 sind jeweils halbkugelförmig nach innen gewölbt, wobei der Radius im Wesentlichen dem Radius der an dem Kajak befestigten Kugel 3 entspricht.

Zur Befestigung des Tragarms 6 werden die beiden Lagerschalen 19, 20 um die Kugel 3 gelegt und mittels in der Figur nicht dargestellter Schrauben, welche durch die Öffnungen 22 gesteckt werden, miteinander verbunden. In der Figur 2 sind zwei solche Öffnungen 22 gezeigt.

In einer besonders bevorzugten Ausführungsform sind vier Bohrungen 22 vorgesehen. Auf jeder Seite der Kugel 3 werden in diesem Fall in einer Richtung parallel zur Längsachse des Distanzstücks 2 zwei Bohrungen 22 angebracht. Diese Variante hat den Vorteil, dass ein gleichmäßigerer Druck von den Lagerschalen 19, 20 auf die Kugel 3 ausgeübt werden kann. Ist nämlich nur eine Bohrung 22 auf jeder Seite vorgesehen, wie in Figur 2 dargestellt, und befindet sich diese nicht genau auf Höhe des Äquators der Kugel 3, besteht die Gefahr, dass auf die obere und die untere Hälfte der Kugel 3 beim Anziehen der Schrauben unterschiedliche Kräfte einwirken und so gegebenenfalls keine optimale Fixierung der Kugel 3 zwischen den Lagerschalen 19, 20 erreicht wird.

In beiden Varianten bilden die Lagerschalen 19, 20 und die Kugel 3 ein Kugelgelenk 5, welches durch Anziehen der Schrauben arretiert wird. Die beiden Lagerschalen 19, 20 werden dabei aneinander gepresst, wodurch eine kraftschlüssige Verbindung mit der Kugel 3 hergestellt wird.

Die erste Lagerschale 19 weist weiterhin eine Aufnahme 21 in Form einer Rohrschelle, d.h. eines Rohrstückes mit einem Längsschlitz 23, auf. Der Tragarm 6 wird in das Rohrstück 21 gesteckt. Die Fixierung des Tragarms 6 in der Aufnahme 21 erfolgt durch Zusammenpressen des Rohrstückes 21 mittels einer Schraube-Mutter-Verbindung. Es ist aber ebenso möglich, den Tragarm 6 fest, d.h. nicht lösbar, mit dem Kugelgelenk 5 zu verbinden.

Je nach Stärke des an dem Tragarm 6 angebrachten Außenbordmotors 8 und je nach Orientierung des Tragarms 6 relativ zum Boot kann über den Tragarm 6 und das Kugelgelenk 3 ein relativ großes Drehmoment auf die Trägerplatte 1 übertragen werden. In einer bevorzugten Ausführungsform ist daher ein Verlängerungsarm 24 vorgesehen, der über eine Art Rohrschelle 25 an dem die Kugel 3 tragenden Distanzstück 2 befestigt wird. Der Verlängerungsarm 24 ist in Figur 3 im Detail gezeigt.

Der Verlängerungsarm 24 weist an seinem mit der Rohrschelle 25 versehenen Ende ein weiteres Gelenk 26 auf, welches zusammen mit der Rohrschelle 25 ein Kreuzgelenk 27 bildet, so dass der Verlängerungsarm 24 relativ zum Distanzstück 2 um zwei zueinander senkrechte Achsen beweglich ist.

An dem entgegengesetzten Ende besitzt der Verlängerungsarm 24 eine Befestigungsvorrichtung, mit der er an einer anderen Stelle am Kajak fixiert werden kann. In Figur 3 ist hierzu eine Kugelklemmvorrichtung 28 entsprechend dem Kugelgelenk 5 in den Figuren 1 und 2 gezeigt. Die Kugelklemmvorrichtung 28 wird mit einer zweiten an dem Kajak angebrachten Kugel 29 verbunden.

Es ist aber auch möglich, anstelle des gezeigten aus Kugelklemmvorrichtung 28 und Kugel 29 bestehenden Kugelgelenks andere Befestigungsvarianten vorzusehen. Wesentlich ist, dass über den Verlängerungsarm 24 das Drehmoment nicht mehr nur von der Kugel 3 bzw. der Trägerplatte 1, sondern auch von dem zweiten Fixpunkt, beispielsweise der zweiten Kugel 29, aufgenommen wird. Die mechanische Belastung auf die Trägerplatte 1 und auf deren Befestigung am Kajak wird so deutlich verringert.

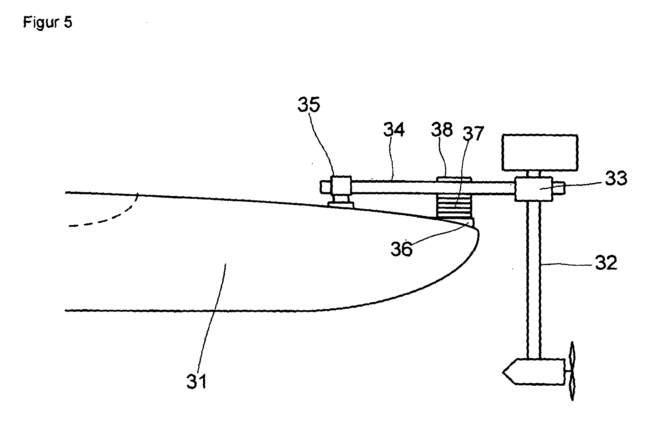

In Figur 5 ist schließlich ein erfindungsgemäßes Kajak 31 mit Außenbordmotor 32 gezeigt. Der Schaft des Außenbordmotors 32 ist, wie oben bereits beschrieben, über ein Befestigungselement 33 an einem Tragarm 34 befestigt, welcher wiederum über ein Kugelgelenk 35 mit dem Kajak verbunden ist.

An der Oberseite des Kajaks 31 ist ein Kunststoff- oder Hartgummielement 36 vorgesehen. Das Kunststoff- oder Hartgummielement 36 kann beispielsweise mit der Kajakoberseite verklebt oder verschraubt sein. An dem Kunststoff- oder Hartgummielement 36 können weitere Auflagerelemente 37 so angebracht werden, dass die Höhe des durch das Kunststoff- oder Hartgummielement 36 und die Auflagerelemente 37 gebildeten Auflagers eingestellt werden kann. Die Höhe des Auflagers wird an die Orientierung des Tragarms 34 und die Form des Bootsrumpfes angepasst, so dass der Tragarm 34 auf dem Auflager 37 zum Liegen kommt und durch dieses gestützt wird. Mittels einer Einspannvorrichtung 38 kann der Tragarm 34 an dem Auflager 37 fixiert werden.

Das Kunststoff- oder Hartgummielement 36 bzw das Auflager 37 sind möglichst nahe am Rand des Kajakrumpfes, insbesondere möglichst weit hinten angeordnet, so dass das von dem Außenbordmotor 32 auf den Tragarm 34 ausgeübte Drehmoment möglichst gut aufgenommen wird.

## Patentansprüche

1. Boot, insbesondere Kajak, mit einer Halterung zur Befestigung eines Außenbordmotors (8) an dem Boot, wobei die Halterung einen Tragarm (6) aufweist, der ein erstes Befestigungselement (5) zur Befestigung des Tragarms (6) an dem Boot aufweist, **dadurch gekennzeichnet, dass** an dem Boot ein Knauf (3) vorgesehen ist und dass das erste Befestigungselement (5) als Klemmvorrichtung (4) zur Aufnahme und Fixierung des Knaufs (3) ausgeführt ist.

2. Boot nach Anspruch 1, **dadurch gekennzeichnet, dass** der Tragarm ein von dem ersten Befestigungselement (5) beabstandetes zweites Befestigungungselement (9) zur Befestigung des Schaftes (7) des Außenbordmotors (8) an dem Tragarm (6) aufweist.

3. Boot nach einem der Ansprüche 1 oder 2, **dadurch gekennzeichnet, dass** die Länge des Tragarms (6) zwischen 50 cm und 100 cm beträgt.

4. Boot nach einem der Ansprüche 2 oder 3, **dadurch gekennzeichnet, dass** der Abstand zwischen dem ersten und dem zweiten Befestigungselement (5, 9) veränderbar ist.

5. Boot nach einem der Ansprüche 2 bis 4, **dadurch gekennzeichnet, dass** das zweite Befestigungselement (9) zwei Drehgelenke (11, 12) aufweist, deren Drehachsen um 90° versetzt gegeneinander angeordnet sind.

6. Boot nach einem der Ansprüche 1 bis 5, **dadurch gekennzeichnet, dass** die Klemmvorrichtung (4) eine erste und eine zweite Lagerschale (19, 20) aufweist, wobei die erste Lagerschale (19) mit dem Tragarm (6) verbunden ist.

7. Boot nach Anspruch 6, **dadurch gekennzeichnet, dass** die zweite Lagerschale (20) lösbar mit der ersten Lagerschale (19) verbunden ist.

8. Boot nach einem der Ansprüche 1 bis 7, **dadurch gekennzeichnet, dass** ein Verlängerungsarm (24) vorgesehen ist, der an dem Knauf (3) und an einem zweiten mit dem Boot verbundenen Fixpunkt (29) befestigt ist.

9. Boot nach einem der Ansprüche 1 bis 8, **dadurch gekennzeichnet, dass** ein Auflager (36, 37) vorgesehen ist, welches auf dem Boot (31) angeordnet ist und auf welches der Tragarm (34) aufgelegt ist.

10. Boot nach Anspruch 9, **dadurch gekennzeichnet, dass** das Auflager (36, 37) an dem Boot (31) befestigt ist.

11. Boot nach einem der Ansprüche 9 oder 10, **dadurch gekennzeichnet, dass** der Tragarm (34) an dem Auflager (36, 37) befestigt, insbesondere lösbar befestigt ist.

12. Boot nach einem der Ansprüche 10 oder 11, **dadurch gekennzeichnet, dass** der Knauf (3) auf der Oberseite des Bootes befestigt ist.

13. Boot nach einem der Ansprüche 10 bis 12, **dadurch gekennzeichnet, dass** das Boot mit einem Ruder versehen ist.

14. Boot nach einem der Ansprüche 10 bis 13, **dadurch gekennzeichnet, dass** der Knauf (3) mittels eines oder mehrerer Hohlraumdübel an dem Boot befestigt ist.

15. Außenbordmotor (8) mit einer Halterung, welche mit einem Tragarm (6) versehen ist, der ein erstes Befestigungselement (5) zur Befestigung des Tragarms (6) an einem Boot, insbesondere an einem Kajak, aufweist, **dadurch gekennzeichnet, dass** als erstes Befestigungselement (5) eine Klemmvorrichtung (4) zur Aufnahme und Fixierung eines mit dem Boot verbundenen Knaufs (3) vorgesehen ist.

## Claims

1. Boat, in particular a kayak, having a mounting for fastening an outboard motor (8) to the boat, wherein the mounting has a supporting arm (6) which has a first attachment element (5) for attaching the supporting arm (6) to the boat, **characterized in that** a knob (3) is provided on the boat, and **in that** the first attachment element (5) is in the form of a clamping apparatus (4) for holding and fixing the knob (3).

2. Boat according to Claim 1, **characterized in that** the supporting arm has a second attachment element (9), which is at a distance from the first attachment element (5), for attaching the shaft (7) of the outboard motor (8) to the supporting arm (6).

3. Boat according to one of Claims 1 or 2, **characterized in that** the length of the supporting arm (6) is between 50 cm and 100 cm.

4. Boat according to one of Claims 2 or 3, **characterized in that** the distance between the first and the second attachment elements (5, 9) is variable.

5. Boat according to one of Claims 2 to 4, **characterized in that** the second attachment element (9) has two rotating joints (11, 12) whose rotation axes are arranged offset through 90° with respect to one another.

6. Boat according to one of Claims 1 to 5, **characterized in that** the clamping apparatus (4) has a first and a second bearing shell (19, 20), with the first bearing shell (19) being connected to the supporting arm (6).

7. Boat according to Claim 6, **characterized in that** the second bearing shell (20) is detachably connected to the first bearing shell (19).

8. Boat according to one of Claims 1 to 7, **characterized in that** an extension arm (24) is provided, and is attached to the knob (3) and to a second fixing point (29), which is connected to the boat.

9. Boat according to one of Claims 1 to 8, **characterized in that** a support (36, 37) is provided and is arranged on the boat (31), and on which the supporting arm (34) is supported.

10. Boat according to Claim 9, **characterized in that** the support (36, 37) is attached to the boat (31).

11. Boat according to one of Claims 9 or 10, **characterized in that** the supporting arm (34) is attached, in particular detachably attached, to the support (36, 37).

12. Boat according to one of Claims 10 or 11, **characterized in that** the knob (3) is mounted on the top surface of the boat.

13. Boat according to one of Claims 10 to 12, **characterized in that** the boat is provided with a rudder.

14. Boat according to one of Claims 10 to 13, **characterized in that** the knob (3) is attached to the boat by means of one or more cavity fixing.

15. Outboard motor (8) having a mounting, which is provided with a supporting arm (6) which has a first attachment element (5) for attaching the supporting arm (6) to a boat, in particular to a kayak, **characterized in that** a clamping apparatus (4) for holding and fixing a knob (3), which is connected to the boat, is provided as the first attachment element (5).

## Revendications

1. Embarcation, en particulier kayak, comprenant une fixation pour fixer un moteur hors-bord (8) sur l'embarcation, la fixation présentant un bras de support (6) qui présente un premier élément de fixation (5) pour la fixation du bras de support (6) sur l'embarcation, **caractérisée en ce que** l'embarcation est pourvue d'un pommeau (3) et **en ce que** le premier élément de fixation (5) est réalisé sous forme de dispositif de serrage (4) pour recevoir et fixer le pommeau (3).

2. Embarcation selon la revendication 1, **caractérisée en ce que** le bras de support présente un deuxième élément de fixation (9) espacé du premier élément de fixation (5), pour la fixation de l'arbre (7) du moteur hors-bord (8) sur le bras de support (6).

3. Embarcation selon l'une quelconque des revendications 1 ou 2, **caractérisée en ce que** la longueur du bras de support (6) est comprise entre 50 cm et 100 cm.

4. Embarcation selon l'une quelconque des revendications 2 ou 3, **caractérisée en ce que** la distance entre le premier et le deuxième élément de fixation (5, 9) peut être modifiée.

5. Embarcation selon l'une quelconque des revendications 2 à 4, **caractérisée en ce que** le deuxième élément de fixation (9) présente deux articulations rotatives (11, 12) dont les axes de rotation sont disposés de manière décalée de 90° l'un par rapport à l'autre.

6. Embarcation selon l'une quelconque des revendications 1 à 5, **caractérisée en ce que** le dispositif de serrage (4) présente une première et une deuxième coque de palier (19, 20), la première coque de palier (19) étant connectée au bras de support (6).

7. Embarcation selon la revendication 6, **caractérisée en ce que** la deuxième coque de palier (20) est connectée de manière desserrable à la première coque de palier (19).

8. Embarcation selon l'une quelconque des revendications 1 à 7, **caractérisée en ce qu'**un bras de prolongement (24) est prévu, lequel est fixé au pommeau (3) et à un deuxième point de fixation (29) connecté à l'embarcation.

9. Embarcation selon l'une quelconque des revendications 1 à 8, **caractérisée en ce qu'**un appui (36, 37) est prévu, lequel est disposé sur l'embarcation (31) et sur lequel est posé le bras de support (34).

10. Embarcation selon la revendication 9, **caractérisée en ce que** l'appui (36, 37) est fixé sur l'embarcation (31).

11. Embarcation selon l'une quelconque des revendications 9 ou 10, **caractérisée en ce que** le bras de support (34) est fixé sur l'appui (36, 37), notamment de manière desserrable.

12. Embarcation selon l'une quelconque des revendications 10 ou 11, **caractérisée en ce que** le pommeau (3) est fixé sur le côté supérieur de l'embarcation.

13. Embarcation selon l'une quelconque des revendications 10 à 12, **caractérisée en ce que** l'embarcation est pourvue d'un gouvernail.

14. Embarcation selon l'une quelconque des revendications 10 à 13, **caractérisée en ce que** le pommeau (3) est fixé à l'embarcation au moyen d'une ou de plusieurs chevilles à cavité.

15. Moteur hors-bord (8) comprenant une fixation qui est pourvue d'un bras de support (6) qui présente un premier élément de fixation (5) pour la fixation du bras de support (6) à une embarcation, notamment à un kayak, **caractérisé en ce qu'**un dispositif de serrage (4) est prévu en tant que premier élément de fixation (5) pour recevoir et fixer un pommeau (3) connecté à l'embarcation.
